# EUROPÄISCHE PATENTSCHRIFT

(11) **EP 2 137 042 B1**
(45) Veröffentlichungstag und Bekanntmachung des Hinweises auf die Patenterteilung: **30.11.2011**
(21) Anmeldenummer: 08708775.5
(22) Anmeldetag: 07.02.2008
(51) Int. Cl.: B60W 30/08, G01S 7/48, G01S 17/66, G01S 17/93, G08G 1/16, B60T 7/22, G01S 15/93, G01S 15/66, G01S 13/87

(54) **VERFAHREN ZUR OBJEKTBILDUNG**
METHOD FOR OBJECT FORMATION
PROCEDE DE FORMATION D'OBJETS

(30) Priorität: 15.03.2007 DE 102007012458
(43) Veröffentlichungstag der Anmeldung: 30.12.2009
(73) Patentinhaber: Robert Bosch GmbH, 70442 Stuttgart (DE)
(72) Erfinder: BECKER, Jan-Carsten, 71701 Schwieberdingen (DE)
(86) Internationale Anmeldenummer: PCT/EP2008/051493
(87) Internationale Veröffentlichungsnummer: WO 2008/110416

(56) Entgegenhaltungen:
- EP-A- 1 085 456
- US-A- 6 163 252
- US-A1- 2004 117 090
- US-B1- 6 239 740

## Beschreibung

Die Erfindung betrifft ein Verfahren zur Objektbildung für eine Umfeldmodellierung, eine Vorrichtung zur Durchführung einer Objektbildung für eine Umfeldmodellierung, ein Computerprogramm und ein Computerprogrammprodukt.

### Stand der Technik

Aus der Informatik und Robotik sind seit längerem Vorgehensweisen zur Sensorsignalverarbeitung für Systeme zur Umgebungserfassung von Robotern bekannt. Dabei wird ein interessierender Detektionsbereich der Sensoren in eine vorgegebene Anzahl von Feldern aufgeteilt. Weiterhin wird für jedes Feld ein Wahrscheinlichkeitswert als Maß für das Vorhandensein eines Hindernisses in dem jeweiligen Feld bestimmt. Diese Vorgehensweisen werden u. a. mit den Begriffen "Occupancy Grids", "Belief Grids" oder "Evidence Grids" bezeichnet. Demnach bilden derartige Vorgehensweisen eine mögliche Grundlage der gitterbasierten Sensorsignalverarbeitung und Sensordatenfusion.

In der Druckschrift DE 10 2004 007 553 A1 wird vorgeschlagen, zur Umfelderfassung bei einem Kraftfahrzeug-Sicherheitssystem die Umgebung des Fahrzeugs in diskrete Felder zu unterteilen. Dabei wird der Wahrscheinlichkeitswert jedes Felds mit einem vorgegebenen Wahrscheinlichkeitsschwellwert verglichen. Wenn der Wahrscheinlichkeitswert des Felds größer als der vorgegebene Wahrscheinlichkeitsschwellwert ist, ist es möglich auf das Vorhandensein eines Hindernisses in diesem Feld und somit im Umgebungsbereich des Kraftfahrzeugs zu schließen

Ein gitterbasiertes Verfahren zur Objekterkennung ist aus der Druckschrift DE 10 2004 032 118 A1 bekannt. Dabei wird eine Fahrzeugumgebung von einem Sensor zyklisch erfasst. Messwerte des Sensors werden in ein frei vergebbares Gitter projiziert und zu gitterbasierten Segmenten zusammengefasst, die erkannten Objekten zugeordnet werden können. Weiterhin werden sog. Tracks für diese Objekte ermittelt, die zum Steuern von Fahrzeugfunktionen heranziehbar sind. Bei diesem Verfahren ist vorgesehen, dass die Schrittweite der Zellen des Gitters in Radial- und/oder Umfangsrichtung derart gestaltete unterschiedliche Schrittweiten aufweist, dass eine funktionsbezogen optimierte Objektauflösung erzielt werden kann.

Die Druckschrift DE 10 2004 039 095 A1 beschreibt ein System zur Erkennung von Fußgängern mittels eines Sensors zur Umgebungserfassung. Dabei erfolgt die Zuordnung der Sensordaten zueinander in einem Gitter nach dem "Grid of Evidence"-Verfahren.

Die Verarbeitung und Fusion von Daten von Sensoren zur sicheren Detektion von Objekten mit einem gitterbasierten Verfahren ist aus der Druckschrift EP 1 672 390 A1 bekannt. Hierbei ist u.a. vorgesehen, dass erste Daten von einem Radarsensor und zweite Daten von einem Lidarsensor bereitgestellt werden.

Eine Einrichtung zum Nachweisen von Hindernissen, die für ein Kraftfahrzeug benutzt werden kann, ist gemäß bekannten Merkmalen des Anspruchs 1 aus der Druckschrift US 6 163 252 A bekannt. Diese Einrichtung umfasst Sensoren zum Erfassen eines Umfelds des Kraftfahrzeugs. Weiterhin wird mit der Vorrichtung eine Aufenthaltswahrscheinlichkeit eines Hindernisses im Umfeld des Kraftfahrzeugs ermittelt. Hierbei wird das Umfeld in eine Vielzahl von Regionen aufgeteilt. Falls eine Aufenthaltswahrscheinlichkeit für ein Hindernis in einer Region einen Grenzwert überschreitet, ist vorgesehen, dass sich das Hindernis in dieser Region des Umfelds aufhält.

### Offenbarung der Erfindung

Das erfindungsgemäße Verfahren ist zur Objektbildung für eine Umfeldmodellierung vorgesehen, wobei eine Handhabung von Informationen eines Sensors unter Berücksichtigung einer mindestens bereichsweise nichtlinearen Segmentierungsschwelle ausgeführt wird.

Dabei kann die zumindest bereichsweise nichtlineare Segmentierungsschwelle in Ausgestaltung als ein Gradmesser dafür dienen, ob in einem Bereich einer Umgebung und somit einem Umfeld des Sensors ein Objekt vorhanden ist oder nicht. Das kann bspw. durch Vergleich eines Werts, der von dem Sensor als Information bereitgestellt wird, mit der nichtlinearen Segmentierungsschwelle erfolgen. Es wird typischerweise davon ausgegangen, dass das von dem Sensor erfasste Umfeld einem Detektionsbereich des Sensors entspricht. Ein zur Durchführung des Verfahrens benutzter Sensor untersucht das Umfeld in der Regel auf Basis elektromagnetischer Wellen. Dabei kann dieser Sensor bspw. Reflektionen eines Objekts erfassen und durch deren Messung die Informationen bereitstellen. Derartige Informationen können zumindest den Wert bzw. einen Wahrscheinlichkeitswert umfassen, der eine Aussage darüber trifft, in welchem quantitativen und/oder qualitativen Umfang aufgrund der erfassten Reflektionen an einer Position des Umfelds ein Objekt vorhanden ist. Um den Wert weiterhin zu interpretieren und somit für weitere Anwendungen, bspw. Funktionen, nutzen zu können, ist in einer Ausgestaltung vorgesehen, den Wert mit der mindestens bereichsweise nichtlinearen Segmentierungsschwelle zu vergleichen und somit eine mögliche Aussage über das Vorhandensein mindestens eines Objekts in dem Umfeld zu treffen. Diese Segmentierungsschwelle kann in mindestens einer Richtung nichtlinear sein, was bspw. bedeuten kann, dass die Segmentierungsschwelle lateral und somit in seitlicher Richtung und/oder longitudinal also in Längsrichtung nichtlinear ist.

Dass hierbei die Segmentierungsschwelle mindestens bereichsweise nichtlinear ist, kann in Ausgestaltung bedeuten, dass diese mindestens einen nichtlinearen Abschnitt oder Bereich aufweist und dass weitere Bereiche dieser mindestens einen Segmentierungsschwelle auch linear sein können. Dies umfasst auch die Möglichkeit, dass die mindestens eine Segmentierungsschwelle über einen gesamten Bereich nichtlinear ist. Die mindestens bereichsweise nichtlineare Segmentierungsschwelle kann auch aus mindestens einer Segmentierungsschwelle bzw. Teilsegmentierungsschwelle zusammengesetzt sein, wobei die mindestens eine derartige Teilsegmentierungsschwelle zumindest bereichsweise nichtlinear ist.

In weiterer Ausgestaltung der Erfindung können für die Segmentierungsschwelle unterschiedliche Implementierungen und somit Umsetzungen oder Ausführungen vorgesehen sein, auf deren Grundlage weitere Varianten zur Handhabung der Informationen ausgeführt werden können. So ist es bspw. möglich, die mindestens eine Segmentierungsschwelle funktionsadaptiv und somit funktionsangepasst zu implementieren. In diesem Fall wird die mindestens eine Segmentierungsschwelle derart quantitativ und/oder qualitativ festgelegt, dass die Informationen des Sensors bei einer Anwendung für eine bestimmte Funktion besonders gut geeignet sind. Falls vorgesehen sein sollte, dass zu einem Zeitpunkt verschiedene Funktionen mit Informationen bedient werden sollen, können gleichzeitig mehrere Segmentierungsschwellen, die an die Funktionen individuell angepasst sind, verwendet werden. Somit ist die nichtlineare Segmentierungsschwelle unter Berücksichtigung einer Funktion implementierbar und kann funktionsspezifisch optimiert werden.

Alternativ oder ergänzend kann auch vorgesehen sein, dass die mindestens eine Segmentierungsschwelle auf einer Kennlinie basierend, situationsadaptiv und somit an eine Situation angepasst und/oder auf einem Modell basierend implementiert wird. Weiterhin kann vorgesehen sein, dass die Objektbildung regelmäßig zellgitterbasiert ausgeführt wird. Dies kann bedeuten, dass das zu modellierende Umfeld in Zellen eines zwei- oder ggf. dreidimensionalen Gitters aufgeteilt wird. Bei einer Ausführung der Erfindung kann jeder Zelle eines derartigen Gitters, in einer Abhängigkeit einer Größe der Zellen und somit in Abhängigkeit einer Auflösung des Gitters, mindestens ein Abschnitt der nichtlinearen Segmentierungsschwelle zugeordnet werden. Die kennlinienbasierte nichtlineare Segmentierungsschwelle kann bspw. auch in einem lokal begrenzten Bereich adaptiv verändert werden.

Außerdem ist es mit dem Verfahren möglich, eine Sensorsignalverarbeitung auszuführen. Hierbei kann vorgesehen sein, dass ein Signal des Sensors mindestens eine Information des Sensors überträgt. Alternativ oder ergänzend kann mit dem Verfahren auch eine Sensordatenfusion ausgeführt werden. Hierbei können die Daten des Sensors bspw. aus Messungen gewonnene Informationen des Sensors umfassen.

Bei einer Anwendung kann das Verfahren für ein Fahrerassistenzsystem ausgeführt werden. Derartige Fahrerassistenzsysteme können als Teile von Fahrzeugen, insbesondere Kraftfahrzeugen, ausgebildet sein. Somit ist es u. a. möglich, ein Umfeld eines Fahrzeugs und somit eine Verkehrssituation, in der sich das Fahrzeug befindet, auf Grundlage einer sensorischen Erfassung zu modellieren. Durch Nutzung einer mindestens bereichsweise nichtlinearen Segmentierungsschwelle kann die Verkehrssituation in geeigneter Weise derart erfasst werden, dass bei Auslegung der Informationen bestimmte Bereiche der Umgebung des Fahrzeugs unter unterschiedlicher Relevanz behandelt werden.

Die erfindungsgemäße Vorrichtung ist zur Durchführung einer Objektbildung für eine Umfeldmodellierung vorgesehen. Dabei weist dieses Vorrichtung mindestens ein Modul auf, das dazu ausgebildet ist, eine Handhabung von Informationen eines Sensors unter Berücksichtigung mindestens einer abschnittsweise nichtlinearen Segmentierungsschwelle auszuführen.

Dabei kann das mindestens eine Modul weiterhin dazu ausgebildet sein, mindestens einen Schritt des voranstehend beschriebenen Verfahrens auszuführen. Weiterhin kann dieses mindestens eine Modul bspw. als Computer oder eine entsprechende Recheneinheit ausgebildet sein.

Die Erfindung betrifft außerdem ein Computerprogramm mit Programmcodemitteln, um alle Schritte eines voranstehend beschriebenen Verfahrens durchzuführen, wenn das Computerprogramm auf einem Computer oder einer entsprechenden Recheneinheit, insbesondere in einer erfindungsgemäßen Vorrichtung, ausgeführt wird.

Das weiterhin erfindungsgemäß vorgesehene Computerprogrammprodukt mit Programmcodemitteln, die auf einem computerlesbaren Datenträger gespeichert sind, ist dazu ausgebildet, um alle Schritte eines erfindungsgemäßen Verfahrens durchzuführen, wenn das Computerprogramm auf einem Computer oder einer entsprechenden Recheneinheit, insbesondere in einer voranstehend beschriebenen erfindungsgemäßen Vorrichtung, ausgeführt wird.

Das Verfahren dient u. a. der Objektbildung für eine zellgitterbasierte Vorgehensweise oder Umfeldmodellierung zur Sensorsignalverarbeitung und Sensordatenfusion oder Multisensor-Datenfusion für bspw. aktive Fahrerassistenzsysteme oder Fahrzeugsicherheitssysteme. Durch die Objektbildung kann bestimmt werden, wo sich in einer Umgebung eines Fahrzeugs ein Objekt befindet. Von dem Objekt können neben einer Position auch weitere kinematische Größen wie Geschwindigkeit und Beschleunigung bestimmt werden, so dass zudem eine Umgebungserfassung durchgeführt werden kann.

Das Verfahren kann zur Verarbeitung von Sensorrohdaten und zur Sensordatenfusion bei einer Fahrzeugumfeldmodellierung eingesetzt werden. Ergänzend oder alternativ ist ein Einsatz bei einer Sensorsignalverarbeitung und Multisensor-Datenfusion für aktive Fahrzeugsicherheitssysteme möglich.

Bei einer Ausführung der Erfindung ist vorgesehen, mindestens eine nichtlineare Segmentierungsschwellen für zellgitterbasierte Vorgehensweisen zur Sensorsignalverarbeitung und Sensordatenfusion für Fahrerassistenzsysteme funktionsadaptiv auszuführen. Somit können Objekte durch Vorgabe einer funktionsspezifischen Kennlinie bzw. einer zwei- oder dreidimensionalen Kennfläche und/oder eines Modells aus einer allgemeinen universellen Umfeldbeschreibung funktionsspezifisch optimiert erzeugt werden. Hierbei kann die Segmentierungsschwelle hinsichtlich einer Funktion des Fahrzeugs angepasst und/oder spezifiziert werden.

Bei der gitterbasierten Ausführung kann das Verfahren bspw. der Modellierung der relevanten bzw. der erfassbaren Umwelt dienen. Hierzu wird die Umgebung in eine Anzahl von Zellen unterteilt und somit diskretisiert. Für jede Zelle wird dabei die Wahrscheinlichkeit berechnet, dass diese Zelle belegt ist bzw. dass die Zelle nicht belegt ist. Durch Berücksichtigung einer Wahrscheinlichkeitsbeschreibung kann mit dem Verfahren bspw. eine vorausschauende Routenplanung erfolgen.

Bei einer optional zellgitterbasierten Durchführung des Verfahrens kann zur Sensordatenfusion durch eine Wahrscheinlichkeitsverteilungen für die Zellbelegungen im Zellgitter zunächst eine universelle funktionsunspezifische Umfeldbeschreibung zur Verfügung gestellt werden. Dabei kann die Objektbildung durch eine Klassifikation von Zellen als belegt oder nicht belegt erfolgen. Bei einer weiteren Anwendung werden unterschiedliche Schnitthöhen für unterschiedliche Funktionen, z. B. für Komfort- und/oder Sicherheitsfunktionen benutzt.

Eine Funktion, an die die Objektbildung in einer Ausgestaltung anzupassen ist, kann in der Regel unterschiedliche Anforderungen an die Objektbildung stellen. Dies hängt davon ab, wo sich im Erfassung- bzw. Wirkbereich der Funktion das potentielle Objekt befindet. Bei geeigneter Durchführung können je nach Auslegung unerwünschte oder auch fehlende Objekte vermieden werden, so dass kein zusätzlicher Aufwand durch Filterung oder durch ein schlechtes Funktionsverhalten erforderlich ist.

Bei einer Ausführung der Erfindung kann zusätzlich zu einer konstanten bzw. linearen Segmentierungsschwelle eine insbesondere funktionsangepasste nichtlineare Segmentierungsschwelle eingesetzt werden, die auf einer Kennlinie basieren kann. Alternativ oder ergänzend kann die Segmentierungsschwelle situationsadaptiv, auf einem Modell basierend, ausgeführt werden.

Bei einem Beispiel für die funktionsangepasste nichtlineare Segmentierungsschwelle ist vorgesehen, dass sich eine Funktion auf den Wirkbereich direkt in Längsrichtung vor dem Fahrzeug zu konzentriert. Hierbei kann vorgesehen sein, dass Objekte, die einen größeren lateralen Versatz aufweisen, nur an die Funktion übergeben werden, wenn sie sehr sicher detektiert werden sollen.

Bei einer Geradeausfahrt ist es bspw. erforderlich, dass Objekte, die sich vor dem Fahrzeug befinden, von besonderer Bedeutung sind, wobei zusätzlich der Abstand zu berücksichtigen ist. Objekte, die sich links oder rechts befinden, sind bei einer Ausführung für die Geradeausfahrt in der Regel weniger zu berücksichtigen.

Die Segmentierungsschwelle kann im Vergleich zu einer konstanten Segmentierungsschwelle zumindest abschnittsweise nichtlinear gewählt werden. In der Regel ist jede andere lateral nichtlineare Schwelle bzw. Segmentierungsschwelle ebenso möglich. Es ist weiterhin denkbar, aufgrund bestimmter funktionsspezifischer Anforderungen eine in Längsrichtung und somit longitudinal nichtlineare Schwelle zu implementieren. Alternativ kann auch in diesem Fall jede andere longitudinal nichtlineare Schwelle verwendet werden. Außerdem kann eine longitudinal nichtlineare Schwelle mit einer lateral nichtlinearen Schwelle kombiniert werden. Insgesamt kann die nichtlineare Segmentierungsschwelle aus mehreren Segmentierungsschwellen bzw. Teilsegmentierungsschwellen zusammengesetzt sein, wobei zumindest eine Segmentierungsschwelle und somit Teilsegmentierungsschwelle zumindest abschnitts- oder bereichsweise nichtlinear ist.

Bei einem Anwendungsfall für das Verfahren werden durch den Sensor bspw. die Rückseiten von vorausfahrenden Fahrzeugen detektiert. Dabei können manchmal auch Reflexionen an Achsen oder anderen weiter vorne liegenden Fahrzeugkomponenten ebenfalls Detektionen ergeben. In diesem Fall ist es erfahrungsgemäß schwierig zu unterscheiden, ob diese zum detektierten Fahrzeugheck gehören, oder ob diese Detektionen ein eigenständiges Objekt darstellen. Dies kann durch geeignete Wahl der nichtlinearen Segmentierungsschwelle behoben werden.

In einem Beispiel ist eine Funktion, die vorwiegend auf direkt vorausfahrende Objekte reagieren soll, gegeben. Für diese Funktion kann mit dem Verfahren eine typischerweise kennlinienbasierte Segmentierungsschwelle in einem lokal begrenzten Bereich adaptiv verändert werden. Hierzu wird bspw. hinter der in Längsrichtung ersten Detektion die nichtlineare Segmentierungsschwelle adaptiv modellbasiert angehoben bzw. erhöht, um Folgedetektionen am gleichen Fahrzeug zu reduzieren.

Eine weitere Ausgestaltung der Erfindung sieht vor, dass die Rückseite eines vorausfahrenden Fahrzeugs möglichst vollständig in der gesamten Breite erfasst werden soll. Dabei ergeben sich erfahrungsgemäß an einer nächstgelegenen Kante des Fahrzeugs, bspw. am Nummernschild, starke Detektionen. Um hierbei Fehldetektionen zu vermeiden, wird die nichtlineare Segmentierungsschwelle üblicherweise hoch angesetzt und demnach nicht zu niedrig gewählt. Um jedoch die Fahrzeugbreite möglichst vollständig zu detektieren, wird in einem per Modell beschriebenen Bereich neben einer starken Detektion die nichtlineare Segmentierungsschwelle zusätzlich adaptiv abgesenkt, um auch schwächere Detektionen in diesem Bereich noch erfassen zu können.

Das erfindungsgemäße Verfahren kann mit weiteren Vorgehensweisen zur Sensorsignalverarbeitung und/oder Sensordatenfusion kombiniert oder ergänzt werden. Im Rahmen einer ersten derartigen Vorgehensweise kann hierbei eine radarinterne Sensorsignalverarbeitung zur Verarbeitung von Radarspektren zu Radarortungen genutzt werden. In diesem Fall kann die Ortung eines Objekts durch Verarbeitung von Informationen, die als Sensordaten vorliegen, im Rahmen einer gitterbasierten probabilistischen Sensordatenfusion durchgeführt werden. Dabei werden mit den Sensordaten für Zellen eines Raumgitters Belegungswahrscheinlichkeiten sowie über eine Segmentierung ein zusammenhängendes Gebiet mit belegten Zellen bestimmt. Das Objekt kann anhand dieses Gebiets geortet werden.

Bei einer zweiten mit dem Verfahren kombinierbaren Vorgehensweise erfolgt eine Erzeugung von unterschiedlichen Objekthypothesen für Komfort- und Sicherheitsfunktionen in Fahrerassistenzsystemen, die auf einer zellgitterbasierten Umfeldmodellierung beruhen. Bei einem Einsatz können mehrere unterschiedliche funktionsspezifische, nichtlineare Segmentierungsschwellwerten in Abhängigkeit von unterschiedlichen Anforderungen an die Objekthypothese verschiedener Fahrerassistenzsysteme festgelegt werden.

Das Verfahren kann auch mit einer dritten Vorgehensweise zur gemeinsamen Verarbeitung und Fusion von Daten aus einer Objekt- oder Merkmalserkennung kombiniert werden. Bei dieser Vorgehensweise wird eine Freiflächenerkennung mit einer zellgitterbasierten Umfeldmodellierung, bspw. für Fahrerassistenzsysteme und insbesondere für prädiktive Sicherheitssysteme, durchgeführt. In diesem Fall kann zum Erkennen eines Umfelds und somit einer Umgebung vorgesehen sein, dass Daten zum Erkennen von Objekten in dem Umfeld und Daten zum Erkennen von freien Gebieten in dem Umfeld gemeinsam verarbeitet werden. Außerdem kann in diesem Zusammenhang eine Wahrscheinlichkeit dafür, dass mindestens ein Gebiet des Umfelds frei ist, bereitgestellt werden.

Bei einer weiteren Anwendung kann das Verfahren bei einem Assistenzsystem für Kraftfahrzeuge zur Unfallvermeidung durch Ausweichen unter Berücksichtigung von Hindernis- und Befahrbarkeitsinformationen zum Einsatz kommen. Dabei kann zur Unfallvermeidung eine Abbildung von Hindernis- und Befahrbarkeitsinformationen in einem Zellgitter erfolgen. Dies ermöglicht u. a. ein automatisches Steuern eines Fahrzeugs, wobei zur Bereitstellung einer Ausweichtrajektorie des Fahrzeugs vor einem Hindernis Informationen über mindestens eine durch das Fahrzeug frei befahrbare Fläche berücksichtigt werden.

Es kann zudem vorgesehen sein, das Verfahren zur Erkennung von Freiflächen aus Objektdetektionen der Umfeldwahrnehmung bei Fahrerassistenzsysteme einzusetzen, wobei ebenfalls eine zellgitterbasierte Umfeldbeschreibung realisiert werden kann. Dabei kann eine derartige Variante des Verfahrens für eine günstige Implementierung einer zellgitterbasierten Umfeldmodellierung zur Sensorsignalverarbeitung und Sensordatenfusion verwendet werden. Hierbei ist im Vergleich zu herkömmlichen Implementierungen ein deutlich geringerer Speicher- und Rechenbedarf erforderlich. Bei dieser Vorgehensweise zum gitterbasierten Verarbeiten von Sensorsignalen wird einem Feld einer Basis, die über mindestens eine erste kinematische Größe definiert wird, mindestens eine Zelle eines Gitters zugeordnet. Der Zelle kann mindestens ein Wert für mindestens eine zweite kinematische Größe, die aus mindestens einem Sensorsignal abgeleitet wird, angehängt werden.

Um bei einer zellgitterbasierten Vorgehensweise die vorhandenen auf der Objektbeschreibung basierenden Funktionen anwenden zu können, kann als Zwischenschritt eine sogenannte Objektbildung oder Segmentierung erfolgen. Diese umfasst in der Regel eine Klassifikation einzelner Zellen als belegt oder nicht belegt, was durch ein Auffinden von Gebieten zusammenhängender belegter Zellen und eine kompakte Beschreibung der zusammenhängenden Zellgebiete als Objekte möglich ist.

Mit dem Verfahren können im Bereich der Fahrerassistenzsysteme etablierte Funktionen, die üblicherweise auf dem Objektbegriff basieren, erweitert werden. Die Sensorik zur Umfeldwahrnehmung detektiert typischerweise sensierbare Gegenstände oder Objekte in der Fahrzeugumgebung und beschreibt diese durch einen geschlossenen Datensatz, bspw. durch Position und weitere kinematische Größen wie Geschwindigkeit und Beschleunigung sowie ggf. noch durch Ausmaße der Objekte und Messunsicherheiten. Dieser Datensatz wird üblicherweise als Objekt bezeichnet. Dabei ergibt sich eine kompakte Beschreibungsform unter Berücksichtigung einer starken Abstraktion von der Rohmessung des Sensors zum Objekt im Sensor in einem Schritt.

Zur Objektgenerierung können belegte Zellregionen, bspw. zusammenhängende Gebiete belegter Zellen, gefunden und zu Objekten verknüpft werden. Obwohl kein Bild im eigentlichen Sinne vorliegt, kann das Zellgebiet als digitalisiertes Bild interpretiert werden. Jede Zelle ist dabei als Pixel zu betrachten, dessen Grauwert durch die Wahrscheinlichkeitsmasse der Zelle gegeben ist. Demnach entspricht das Auffinden zusammenhängender Zellen, also zusammenhängender Bildbereiche, einer Segmentierung im Sinne der Bildverarbeitung.

Eine Klassifikation einzelner Zellen als belegt oder nicht belegt erfolgt in Ausgestaltung des Verfahrens u. a. durch eine Schwellwertbildung. Hierbei kann ein Feld mit dem größten Wahrscheinlichkeitswert ermittelt werden. Wenn dieser Wahrscheinlichkeitswert größer als ein definierter nichtlinearer, insbesondere funktionsadaptiver Wahrscheinlichkeitsschwellwert ist, der typischerweise auf der nichtlinearen Segmentierungsschwelle basiert, kann auf das Vorhandensein eines Objekts oder Hindernisses im Umgebungsbereich des Kraftfahrzeugs geschlossen werden.

Um auch weiter entfernte Objekte detektieren zu können, kann der nichtlineare Segmentierungsschwellwert bzw. die nichtlineare Segmentierungsschwelle entfernungsabhängig implementiert werden, wobei für weiter entfernte Zellen ein niedrigerer Segmentierungsschwellwert angesetzt wird. Weiter entfernte Detektionen ergeben üblicherweise eine niedrigere Rückstreuamplitude, was wiederum aus einer niedrigeren Wahrscheinlichkeitsmasse für die Belegung weiter entfernter Zellen gegenüber näheren Zellen resultiert.

In weiterer Ausgestaltung können mehrere unterschiedliche funktionsspezifische nichtlineare Segmentierungsschwellen eingesetzt werden, wobei diese in Abhängigkeit der unterschiedlichen Anforderungen an die Objekthypothese für verschiedene Fahrerassistenzsysteme, z. B. Komfort- und Sicherheitssysteme festgelegt, werden.

Anhand einer definierten Segmentierungsschwelle bzw. Schwelle ε wird eine Zelle gemäß ihrer Wahrscheinlichkeitsmasse für P ≥ ε als belegt oder für P < ε als nicht belegt klassifiziert. Typischerweise kommen dabei nur Zellen, die als belegt klassifiziert sind, für die Objektbildung in Frage. Werte für die nichtlineare Segmentierungsschwelle können durch geeignete Wahl oder Definition der Menge aller ε bestimmt werden.

Weiterhin kann im Rahmen des Verfahrens zum Auffinden von Gebieten zusammenhängender Zellen der sog. Region-Growing-Algorithmus genutzt werden. Dabei wird das Zellgebiet systematisch zeilen- und spaltenweise durchsucht. Eine erste Zelle, die das Schwellwertkriterium P ≥ ε erfüllt, dient typischerweise als Keimzelle. Nachfolgend werden alle mit dieser Zelle zusammenhängenden Nachbarzellen mit P ≥ ε gesucht. Gefundene Nachbarzellen dienen wiederum als Keimzelle. Der Vorgang wiederholt sich so lange, bis alle mit der Keimzelle zusammenhängenden Zellen gefunden wurden. Diese werden üblicherweise einem Objekt zugeordnet. Danach wird das Zellgebiet weiter durchsucht, bis eine weitere Keimzelle gefunden wird oder alle Zellen des Zellgebietes durchlaufen wurden.

Zur Beschreibung zusammenhängender Gebiete können auch umschreibende achsparallele Rechtecke, umschreibende flächenminimale Rechtecke, umschreibende ausgerichtete Rechtecke sowie konvexe Hüllen als Beschreibungsform für zusammenhängende Zellgebiete untersucht werden. Die Beschreibung durch konvexe Hüllen kann alle wesentlichen Informationen enthalten und einfach weiter verdichtet werden. Die Entscheidung für die konvexe Hülle oder eine einfachere Beschreibungsform hängt in Ausgestaltung von den Anforderungen der Folgeapplikation ab, so dass die Objektbeschreibung in der Regel funktionsspezifisch durchgeführt werden kann.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
- Figur 1: zeigt in schematischer Darstellung eine Ausführungsform zu einem Ablauf eines gitterbasierten Verfahrens zur Sensorsignalverarbeitung und Sensordatenfusion.
- Figur 2: zeigt Beispiele zur Anwendung einer funktionsabhängigen Segmentierungsschwelle.
- Figur 3: zeigt in schematischer Darstellung Beispiele für eine Segmentierung.
- Figur 4: zeigt ein Beispiel für eine entfernungsabhängige Segmentierungsschwelle.
- Figur 5: zeigt ein Beispiel für eine funktionsabhängige Segmentierungsschwelle.
- Figur 6: zeigt ein Beispiel für eine lateral nichtlinear ansteigende Segmentierungsschwelle.
- Figur 7: zeigt in schematischer Darstellung die Segmentierungsschwelle aus Figur 6 im Vergleich mit einer konstanten Segmentierungsschwelle.
- Figur 8: zeigt in schematischer Darstellung eine Ausführungsform einer longitudinal nichtlinear abnehmenden Segmentierungsschwelle.
- Figur 9: zeigt in schematischer Darstellung ein Beispiel einer Kombination einer longitudinal nichtlinearen mit einer lateral nichtlinearen Segmentierungsschwelle.
- Figur 10: zeigt in schematischer Darstellung eine Ausführungsform einer erfindungsgemäßen Vorrichtung bei einer Anwendung einer Ausführungsform des erfindungsgemäßen Verfahrens.

Die Erfindung ist anhand von Ausführungsbeispielen in der Zeichnung schematisch dargestellt und wird im folgenden unter Bezugnahme auf die Zeichnung ausführlich beschrieben.

### Ausführungsformen der Erfindung

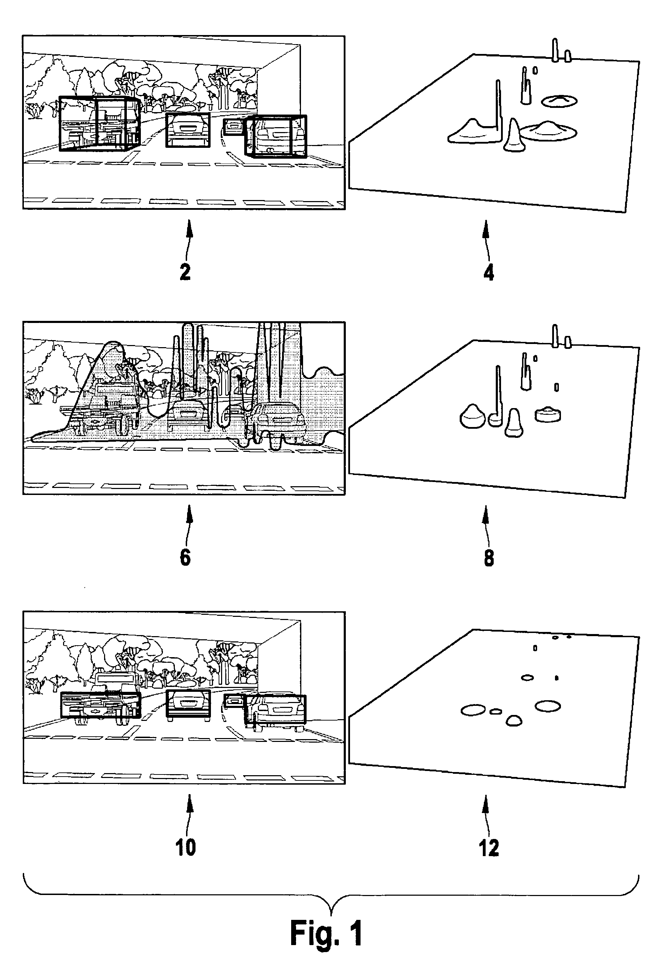

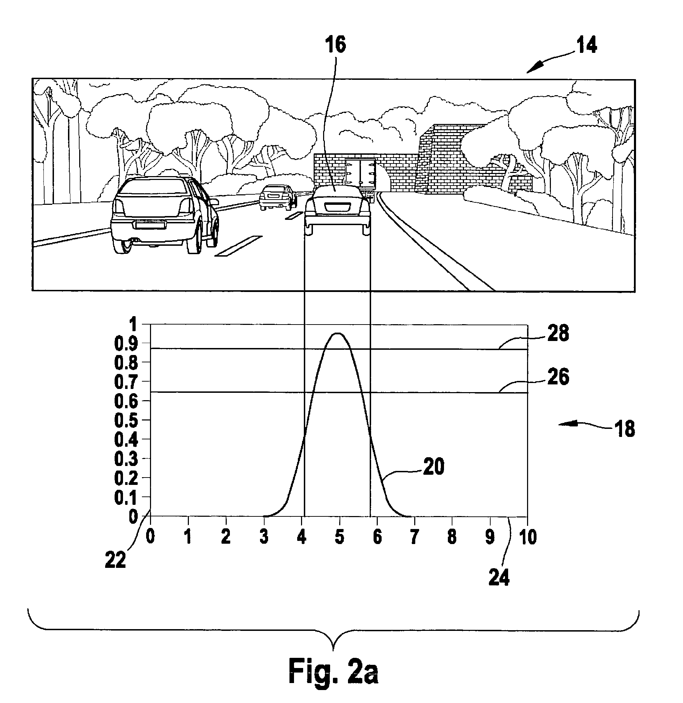

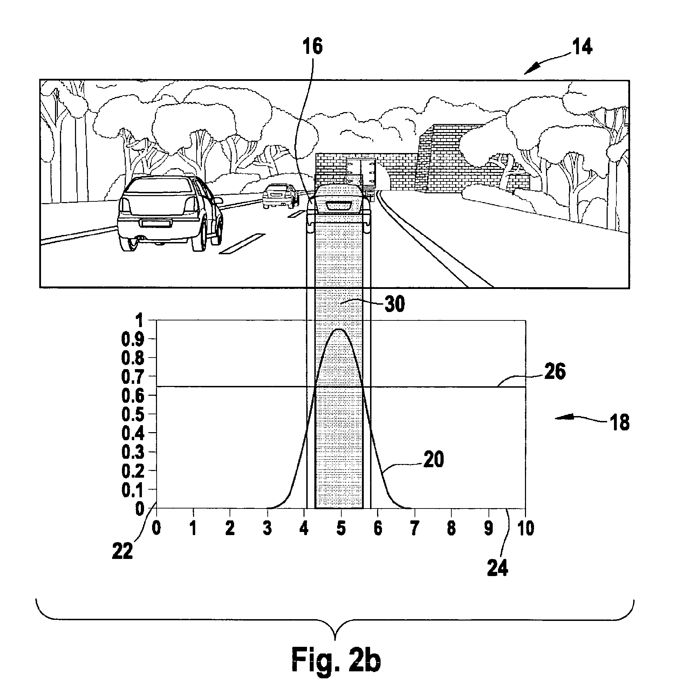

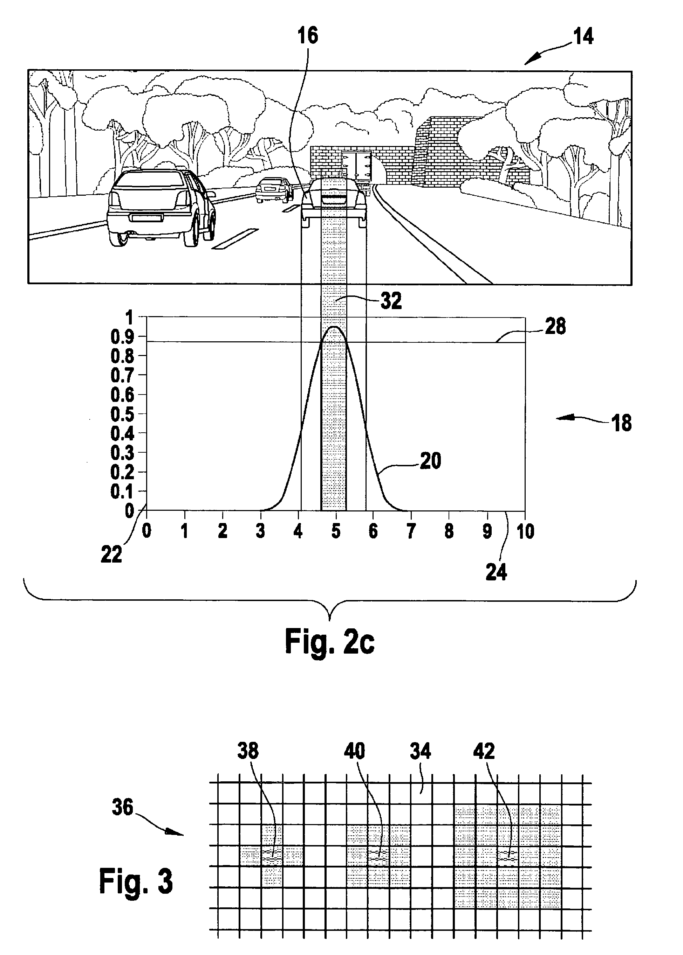

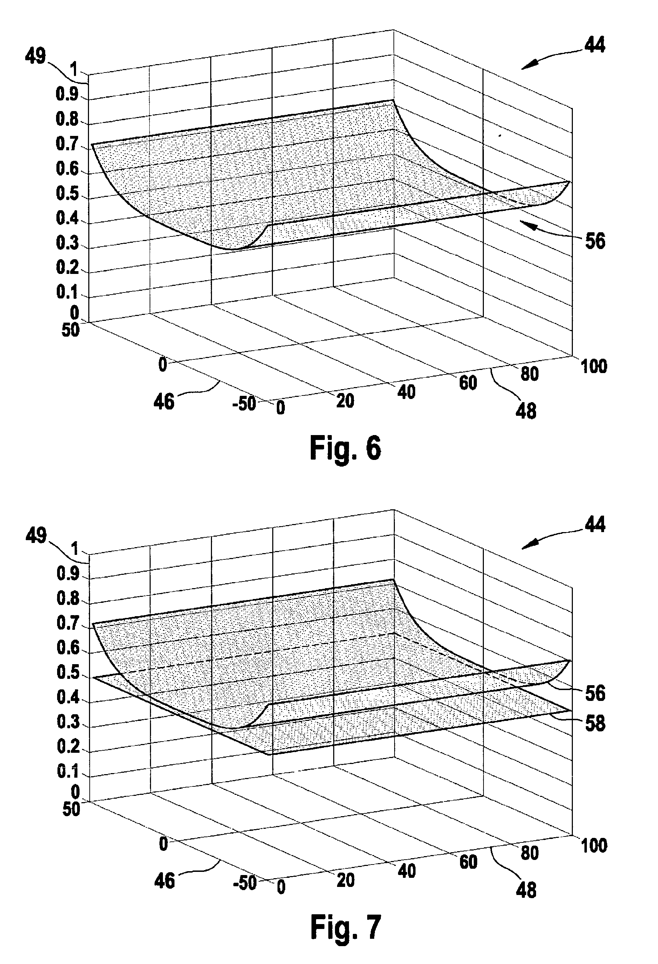

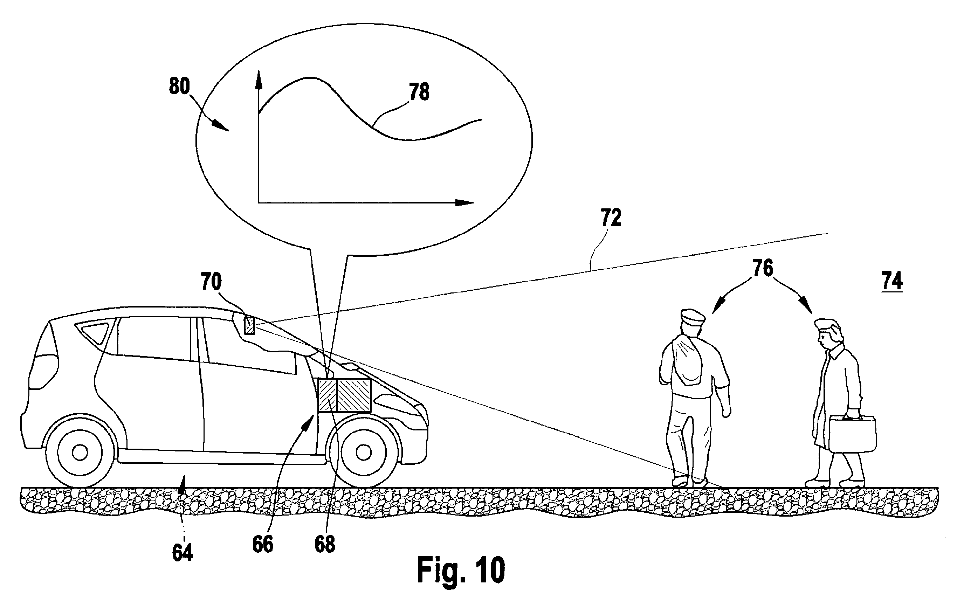

Anhand von Figur 1 ist in schematischer Darstellung ein Beispiel für einen Ablauf eines gitterbasierten Verfahrens zur Sensorsignalverarbeitung gezeigt. Hierbei ist vorgesehen, als ein zu modellierendes Umfeld eine Verkehrssituation zu erfassen. Dabei zeigt in Figur 1 eine erste Abbildung 2 Sensor-Objekte, ein erstes Diagramm 4 eine Umfeldmodellierung, eine zweite Abbildung 6 eine Wahrscheinlichkeitsverteilung, ein zweites Diagramm 8 eine Darstellung von Zellen nach einer Schnittbildung innerhalb der Umfeldmodellierung, eine dritte Abbildung 10 resultierende SDF-Objekte sowie ein drittes Diagramm 12 resultierende Zellgebiete innerhalb der Umfeldmodellierung. Die drei Abbildungen 2, 6, 10 zeigen dieselbe Verkehrssituation. Dabei sind in der ersten Abbildung 2 Fahrzeugen, die von einem Sensor als Objekte erkannt werden, Quader überblendet. Darauf basierend wird das erste Diagramm 4 bereitgestellt, in dem die daraus resultierende Umfeldmodellierung aufgetragen ist. Ausgehend hiervon wird, wie in der zweiten Abbildung 6 dargestellt, innerhalb der Verkehrssituation jedem Objekt eine Wahrscheinlichkeitsverteilung zugeordnet. In weiterer Abfolge sind hierzu in dem zweiten Diagramm 8 Werte für die Zellen nach einer durchgeführten Schnittbildung dargestellt. Darauf basierend sind innerhalb der dritten Abbildung 10 den Objekten Rechtecke zugeordnet, so dass die einzelnen Objekte als resultierende SDF-Objekte identifiziert werden. Davon ausgehend wird das dritte Diagramm 12 bereitgestellt, in dem belegte Zellen, in denen somit ein Objekt vorhanden ist, eindeutig gekennzeichnet sind.

Die Figuren 2a, 2b, 2c zeigen jeweils oben eine schematische Darstellung eines Umfelds 14, das hierbei jeweils eine Verkehrssituation umfasst. Dieses Umfeld 14 wird jeweils von einem hier nicht dargestellten Fahrzeug mittels eines Sensors erfasst. Im Rahmen einer möglichen Ausführungsform des Verfahrens wird hierbei als Objekt 16 ein unmittelbar vorausfahrendes Fahrzeug beobachtet. Unterhalb eines jeweilig schematisch dargestellten Umfelds 14 ist in den Figuren 2a, 2b, 2c jeweils ein Diagramm 18 mit einer Funktion für einen Wahrscheinlichkeitswert 20 dargestellt. In diesen Diagrammen 18 ist der auf 1 normierter Wert des Wahrscheinlichkeitswerts 20 entlang der vertikal orientierten Achse 22 über einer horizontal orientierten Achse 24 für eine Längsausdehnung des Objekts 16 aufgetragen.

In dem Diagramm 18 aus Figur 2a ist zusätzlich eine erste horizontale Gerade 26 für eine Komfortfunktion sowie eine zweite horizontale Gerade 28 für eine Sicherheitsfunktion eingezeichnet.

In dem Diagramm 18 der Figur 2b ist der Übersichtlichkeit wegen neben der Kurve für den Wahrscheinlichkeitswert 20 die erste Gerade 26 für die Komfortfunktion, in diesem Fall für eine sog. active/adaptive cruise control (ACC) für eine Abstandsregelung, dargestellt. Ein erster Balken 30 erstreckt sich entlang eines Bereichs der zweiten Achse 24, bei dem der Wahrscheinlichkeitswert größer als die erste Gerade 26 für die Komfortfunktion ist, so dass dadurch eine Schnitthöhe dieser Komfortfunktion dargestellt wird. Durch diesen ersten Balken 30 wird angezeigt, in welchem Bereich des Umfelds 14 das vorausfahrende Objekt 16 als besonders relevant zu erachten ist.

In dem Diagramm 18 der Figur 2c ist der Kurve für den Wahrscheinlichkeitswert 20 die zweite Gerade 28 für eine Sicherheitsfunktion, hier für eine Notbremsung, dargestellt. Im Bereich einer Schnitthöhe, in der der Wahrscheinlichkeitswert 20 größer als die zweite Gerade 28 ist, ist in den Diagrammen 18 ein zweiter Balken 32 eingetragen. Durch diesen zweiten Balken 32 wird angezeigt, in welchem Bereich des Umfelds 14 das vorausfahrende Objekt 16 für eine Notbremsung als besonders relevant zu erachten ist.

Figur 3 zeigt in schematischer Darstellung ein aus mehreren Zellen 34 gebildetes Gitter 36. Innerhalb dieses Gitters 36 sind zur Verdeutlichung einer Segmentierung, die bei einer Ausführungsform des erfindungsgemäßen Verfahrens durchzuführen ist, eine erste Keimzelle 38, eine zweite Keimzelle 40 sowie eine dritte Keimzelle 42 dunkelgrau unterlegt. Für diese drei Keimzellen 38, 40, 42 gilt, dass ein Wahrscheinlichkeitswert und somit ein Schwellwertkriterium einen Schwellwert übersteigt. In weiterer Ausführung des Verfahrens werden zu diesen Keimzellen 38, 40, 42 benachbarte Zellen 34 gesucht, die hier hellgrau markiert sind. Für diese benachbarten Zellen 34 wird ebenfalls untersucht, ob das Schwellwertkriterium erfüllt ist. Dabei gefundene benachbarte Zellen 34 bzw. Nachbarzellen, die das Schwellwertkriterium erfüllen, werden als neue Keimzellen ausgewiesen. Dieser Vorgang wiederholt sich so lange, bis alle mit der hier jeweils zentralen Keimzelle 38, 40, 42 benachbarten zusammenhängenden Zellen 34 gefunden werden. Diese zusammenhängenden Zellen 34 werden dann einem detektierten Objekt zugeordnet. Eine Überprüfung der benachbarten Zellen 34 kann dabei in einer sog. Vierer-Nachbarschaft erfolgen, wobei hier für die erste Keimzelle 38 nur die direkten horizontal und vertikal angrenzenden Zellen 34 berücksichtigt werden. In einer sog. Achter-Nachbarschaft der zweiten Keimzelle 40 werden zusätzlich zu den Zellen 34 der Vierer-Nachbarschaft noch die diagonal liegenden Zellen 34 betrachtet. Die hellgrau unterlegten benachbarten Zellen 34 der dritten Keimzelle 42 zeigen in Figur 3 ein Beispiel für eine sog. 24er-Nachbarschaft.

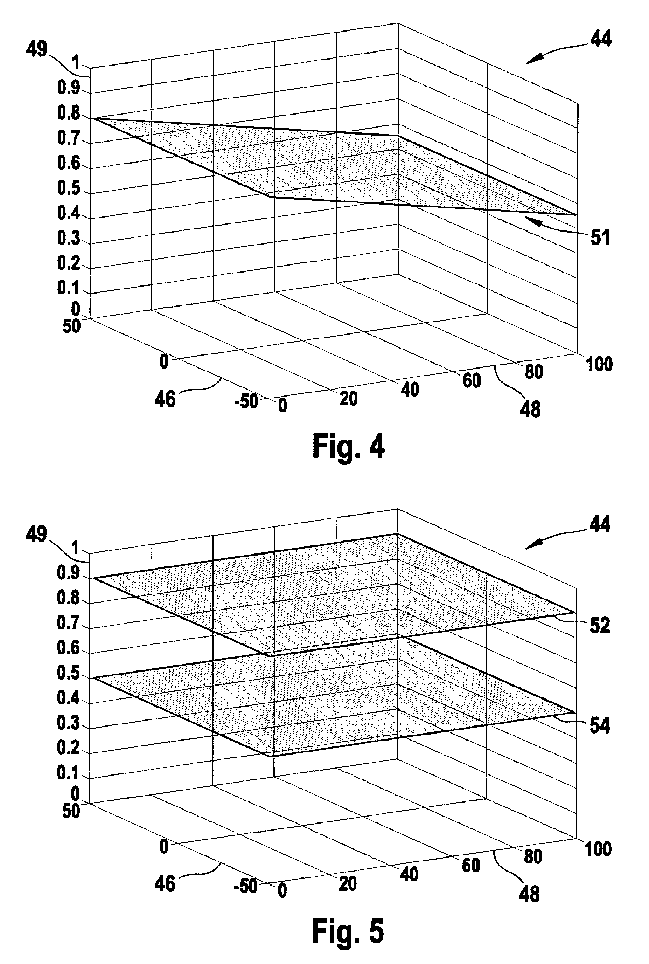

Die nachfolgenden Figuren 4 bis 9 zeigen jeweils ein Diagramm 44, das durch eine erste Achse 46, eine zweite Achse 48 sowie eine dritte Achse 49 aufgespannt ist. Dabei sind entlang der ersten Achsen 46 jeweils laterale und somit seitliche Ausdehnungen von -50 bis +50 m aufgetragen. Entlang der zweiten Achsen 48 sind jeweils longitudinale und somit längsgerichtete Ausdehnungen von 0 bis 100 m aufgetragen. Entlang der dritten Achsen 50 sind auf 1 normierte Wahrscheinlichkeitswerte aufgetragen.

In dem Diagramm 18 aus Figur 4 ist ein Beispiel für eine entfernungsabhängige Segmentierungsschwelle 51 dargestellt.

Das Diagramm 44 aus Figur 5 zeigt zwei Beispiele für funktionsabhängige Segmentierungsschwellen 52, 54. Dabei ist die erste Segmentierungsschwelle 52 für eine Abstandsregelung vorgesehen. Die zweite Segmentierungsschwelle 54 dient einer sog. PSS-Funktion.

Ein erstes Beispiel für eine nichtlineare Segmentierungsschwelle 56 ist in dem Diagramm 44 von Figur 6 eingetragen. Diese nichtlineare Segmentierungsschwelle ist entlang der ersten Achse 46 für geringe laterale Ausdehnungen weitgehend konstant. Für größere Ausdehnungen steigt diese Segmentierungsschwelle 56 nichtlinear an.

Ein derartiger Anstieg der nichtlinearen Segmentierungsschwelle 56 ist anhand des Diagramms 44 aus Figur 7 durch Vergleich mit einer konstanten Segmentierungsschwelle 58 verdeutlicht.

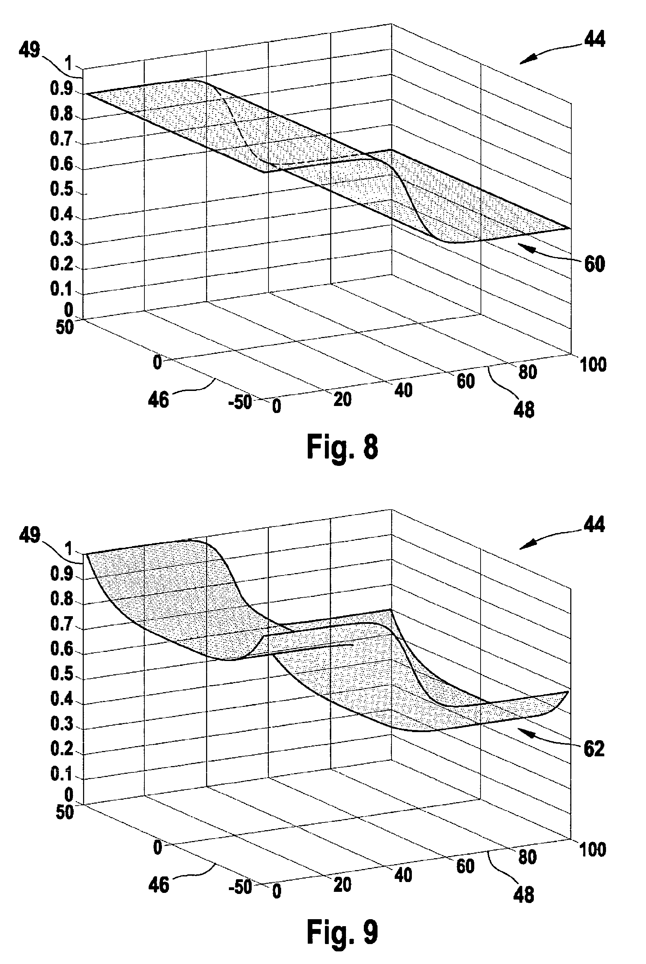

In dem Diagramm 44 aus Figur 8 ist ein zweites Beispiel für eine nichtlineare Segmentierungsschwelle 60 dargestellt. Diese nichtlineare Segmentierungsschwelle 60 ist für geringe Abstände sowie für große Abstände jeweils weitgehend konstant. In einem Bereich für mittlere Abstände nehmen Werte für diese nichtlineare Segmentierungsschwelle 60 nichtlinear ab.

Ein drittes Beispiel für eine nichtlineare Segmentierungsschwelle 62 ist in dem Diagramm 44 aus Figur 9 dargestellt. Dabei umfasst diese nichtlineare Segmentierungsschwelle 62 eine Kombination einer longitudinal nichtlinearen Segmentierungsschwelle mit einer lateral nichtlinearen Segmentierungsschwelle. Dies bedeutet, dass diese nichtlineare Segmentierungsschwelle 62 sowohl entlang der ersten Achse 46 für eine laterale Ausdehnung als auch entlang der zweiten Achse 48 entlang der longitudinalen Ausdehnung sich nichtlinear verändert.

Figur 10 zeigt in schematischer Darstellung ein Fahrzeug 64, das eine Ausführungsform einer erfindungsgemäßen Vorrichtung 66 mit einem Modul 68 sowie einen Sensor 70 aufweist. Der Sensor 70 ist dazu ausgebildet, innerhalb seines Detektionsbereichs 72, der hier durch die Geraden begrenzt ist, ein Umfeld 74 des Fahrzeugs 64 zu erfassen. Innerhalb dieses Umfelds 74 halten sich Personen auf, die von dem Sensor 70 als Objekte 76 erfasst werden. Der Sensor 70 stellt während einer Detektion Messergebnisse und somit Informationen zu dem Umfeld bereit. Diese Informationen werden von der Vorrichtung 66 verarbeitet. Zur Handhabung dieser Informationen ist das Modul 68 der Vorrichtung 66 dazu ausgebildet, diese Handhabung unter Berücksichtigung einer mindestens bereichsweise nichtlinearen Segmentierungsschwelle 78, die hier in einem Diagramm 80 aufgetragen ist, auszuführen.

## Patentansprüche

1. Verfahren zur Objektbildung für eine Umfeldmodellierung für ein Fahrzeug, bei dem eine Handhabung von Informationen eines Sensors (70) unter Berücksichtigung einer mindestens bereichsweise nichtlinearen Segmentierungsschwelle (56, 60, 62, 78) ausgeführt wird, wobei die mindestens eine nichtlineare Segmentierungsschwelle (56, 60, 62, 78) funktionsadaptiv implementiert wird, und wobei unterschiedliche Schnitthöhen für unterschiedliche Funktionen, für Komfort- und/oder Sicherheitsfunktionen, benutzt werden.

2. Verfahren nach Anspruch 1, bei dem die mindestens eine nichtlineare Segmentierungsschwelle (56, 60, 62, 78) auf einer Kennlinie basierenden implementiert wird.

3. Verfahren nach Anspruch 1 oder 2, bei dem die mindestens eine nichtlineare Segmentierungsschwelle (56, 60, 62, 78) situationsadaptiv, auf einem Modell basierend, implementiert wird.

4. Verfahren nach einem der voranstehenden Ansprüche, bei dem die Objektbildung zellgitterbasiert ausgeführt wird.

5. Verfahren nach einem der voranstehenden Ansprüche, bei dem eine Sensorsignalverarbeitung ausgeführt wird.

6. Verfahren nach einem der voranstehenden Ansprüche, bei dem eine Sensordatenfusion ausgeführt wird.

7. Verfahren nach einem der voranstehenden Ansprüche, das für ein Fahrerassistenzsysteme ausgeführt wird.

8. Vorrichtung zur Durchführung einer Objektbildung für eine Umfeldmodellierung für ein Fahrzeug, die mindestens ein Modul (68) aufweist, das dazu ausgebildet ist, eine Handhabung von Informationen eines Sensors (70) unter Berücksichtigung mindestens einer abschnittsweise nichtlinearen Segmentierungsschwelle (56, 60, 62, 78) auszuführen, die mindestens eine nichtlineare Segmentierungsschwelle (56, 60, 62, 78) funktionsadaptiv zu implementieren und unterschiedliche Schnitthöhen für unterschiedliche Funktionen, für Komfort- und/oder Sicherheitsfunktionen, zu benutzen.

9. Computerprogramm mit Programmcodemitteln, um alle Schritte eines Verfahrens nach einem der Ansprüche 1 bis 7 durchzuführen, wenn das Computerprogramm auf einem Computer oder einer entsprechenden Recheneinheit, insbesondere in einer Vorrichtung (66) nach Anspruch 8, ausgeführt wird.

10. Computerprogrammprodukt mit Programmcodemitteln, die auf einem computerlesbaren Datenträger gespeichert sind, um alle Schritte eines Verfahrens nach einem der Ansprüche 1 bis 7 durchzuführen, wenn das Computerprogramm auf einem Computer oder einer entsprechenden Recheneinheit, insbesondere in einer Vorrichtung (66) nach Anspruch 8, ausgeführt wird.

## Claims

1. Method for object formation for surroundings modelling for a vehicle, in the case of which information from a sensor (70) is handled taking account of an at least partially non-linear segmentation threshold (56, 60, 62, 78), the at least one non-linear segmentation threshold (56, 60, 62, 78) being implemented in a function-adaptive fashion and use being made of different cutting heights for different functions, for comfort functions and/or safety functions.

2. Method according to Claim 1, in which the at least one non-linear segmentation threshold (56, 60, 62, 78) is implemented on the basis of a characteristic curve.

3. Method according to Claim 1 or 2 in which the at least one non-linear segmentation threshold (56, 60, 62, 78) is implemented in a situation-adaptive fashion on the basis of a model.

4. Method according to one of the preceding claims, in which the object formation is executed in cell-grid based fashion.

5. Method according to one of the preceding claims, in which sensor signal processing is executed.

6. Method according to one of the preceding claims, in which sensor data fusion is executed.

7. Method according to one of the preceding claims which is for a driver assistance system.

8. Device for carrying out object formation for surroundings modelling for a vehicle which has at least one module (68) which is designed to handle information from a sensor (70) by taking account of at least a partially non-linear segmentation threshold (56, 60, 62, 78), to implement the at least one non-linear segmentation threshold (56, 60, 62, 78) in a function-adaptive fashion, and to use different cutting heights for different functions, for comfort functions and/or safety functions.

9. Computer program with program code means for the purpose of carrying out all the steps of a method according to one of Claims 1 to 7, when the computer program is executed on a computer or an appropriate arithmetic logic unit, particularly in a device (66) according to Claim 8.

10. Computer program product with program code means which are stored on a computer-readable data carrier, for the purpose of carrying out all the steps of a method according to one of Claims 1 to 7, when the computer program is executed on a computer or an appropriate arithmetic logic unit, in particular in a device (66) according to Claim 8.

## Revendications

1. Procédé de formation d'objets pour une modélisation de l'environnement d'un véhicule, dans lequel des informations d'un détecteur (70) sont manipulées en tenant compte d'un seuil de segmentation (56, 60, 62, 78) dont au moins certaines parties sont non linéaires, le ou les seuils de segmentation (56, 60, 62, 78) non linéaires étant mis en oeuvre de manière fonctionnellement adaptative, différentes hauteurs de coupe de différentes fonctions étant utilisées pour des fonctions de confort et/ou des fonctions de sécurité.

2. Procédé selon la revendication 1, dans lequel le ou les seuils de segmentation (56, 60, 62, 78) non linéaires sont mis en oeuvre sur la base d'une ligne caractéristique.

3. Procédé selon la revendication 1 ou 2, dans lequel le ou les seuils de segmentation (56, 60, 62, 78) non linéaires sont mis en oeuvre en adaptation aux situations, sur la base d'un modèle.

4. Procédé selon l'une des revendications précédentes, dans lequel la formation d'objets est réalisée sur la base d'une grille de cellules.

5. Procédé selon l'une des revendications précédentes, dans lequel un traitement des signaux du détecteur est réalisé.

6. Procédé selon l'une des revendications précédentes, dans lequel une fusion des données des détecteurs est réalisée.

7. Procédé selon l'une des revendications précédentes, exécuté pour un système d'assistance au conducteur.

8. Dispositif d'exécution d'une formation d'objets pour une modélisation de l'environnement d'un véhicule, le dispositif présentant au moins un module (68) configuré pour exécuter une manipulation d'informations d'un détecteur (70) en tenant compte d'au moins un seuil de segmentation (56, 60, 62, 78) dont au moins certaines parties sont non linéaires, pour mettre en oeuvre le ou les seuils de segmentation (56, 60, 62, 78) non linéaires de manière fonctionnellement adaptative et pour utiliser différentes hauteurs de coupe de différentes fonctions pour des fonctions de confort et/ou des fonctions de sécurité.

9. Programme informatique doté de moyens de code de programme permettant d'exécuter toutes les étapes d'un procédé selon l'une des revendications 1 à 7 lorsque le programme informatique est exécuté sur un ordinateur ou une unité de calcul appropriée, en particulier dans un dispositif (66) selon la revendication 8.

10. Produit de programme informatique doté de moyens de code de programme conservés sur un support de données lisible par ordinateur en vue d'exécuter toutes les étapes d'un procédé selon l'une des revendications 1 à 7 lorsque le programme informatique est exécuté sur un ordinateur ou une unité de calcul appropriée, en particulier dans un dispositif (66) selon la revendication 8.
